# EUROPEAN PATENT SPECIFICATION

(11) **EP 1 507 366 B1**
(45) Date of publication and mention of the grant of the patent: **21.02.2007**
(21) Application number: 04019059.7
(22) Date of filing: 11.08.2004
(51) Int. Cl.: H04L 12/28

(54) **Public internet connecting service system and access line connecting device**
System für den öffentlichen Internetzugang und Gerät zum Anschluss an die Zugangsleitung
Système pour l'accès public à Internet et appareil de raccordement à une ligne d'accès

(30) Priority: 11.08.2003 JP 2003291238
(43) Date of publication of application: 16.02.2005
(73) Proprietor: NEC CORPORATION, Tokyo (JP)
(72) Inventor: Zaitsu, Makoto, Tokyo (JP)
(74) Representative: Betten & Resch

(56) References cited:
- EP-A- 1 372 301
- US-A1- 2002 075 844
- US-A1- 2002 174 335
- BAHL P ET AL: "Secure wireless internet access in public places" ICC 2001. 2001 IEEE INTERNATIONAL CONFERENCE ON COMMUNICATIONS. CONFERENCE RECORD. HELSINKY, FINLAND, JUNE 11 - 14, 2001, IEEE INTERNATIONAL CONFERENCE ON COMMUNICATIONS, NEW YORK, NY : IEEE, US, vol. VOL. 1 OF 10, 11 June 2001 (2001-06-11), pages 3271-3275, XP010553855 ISBN: 0-7803-7097-1

## Description

### BACKGROUND OF THE INVENTION

The present invention relates to Internet connecting services using a wireless connection and, in particular, wireless LAN.

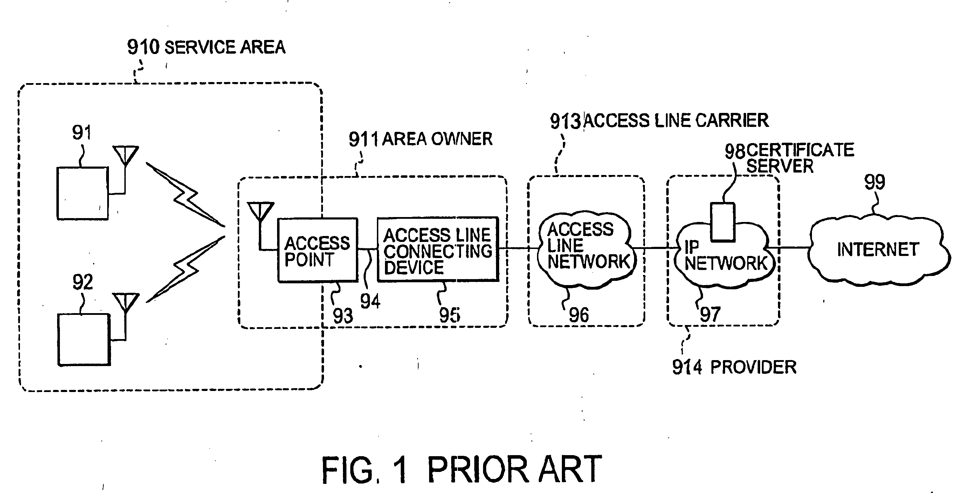

A description is given of a conventional system for providing public Internet connecting services using wireless LAN. Referring to Fig. 1, a public Internet connecting service system includes mobile terminals 91 and 92 and an access point 93 according to a conventional art.

The access point 93 is connected to an access line connecting device 95 by wiring LAN 94. The access line connecting device 95 is, e.g., an ADSL (Asymmetric Digital Subscriber Line) modem or router. The access point 93 and the access line connecting device 95 are, e.g., equipment of an area owner 911 of the public Internet connecting service. The area owner 911 provides a service area 910 of the public Internet connecting service.

The access line connecting device 96 is connected to an IP network 97 which is provided by a provider 914 via an access line network 96 provided by an access line carrier 913. The provider 914 is a carrier which provides the public Internet connecting services. The access line network 96 is, e.g., ADSL or FTTH (Fiber To The Home). The IP network 97 is connected to an Internet 99. The IP network 97 includes a certificate server 98 for certificating a user and for connecting a device certificated by the certificate server 98 to the Internet 99.

The mobile terminals 91 and 92 are mobile information terminals which can be connected to the wireless LAN, and are owned by the user of the public Internet connecting service. For example, the mobile terminals 91 and 92 include notebook-type personal computers (PCs) which connect card-type wireless LAN modules. A network is formed by the access point 93 and a plurality of wireless LAN modules in a wireless system so as to communicate data therebetween.

The area owner 911 is an Internet café as a café which provides an Internet connecting environment. A related technology is disclosed in Japanese Unexamined Patent Application Publication No. 2003-67630. The Internet café has the access point 93 and the access line connecting device 95 which are connected to a broadband access line network 96. Further, the inside of the Internet cafe is the service area 910, thus to provide the Internet connecting environment. The user uses the mobile terminals 91 and 92, and accesses the Internet 99 via the access point 93 in the service area 910 for public Internet connecting services.

The conventional public Internet connecting services have the following problems.

That is, in the conventional public Internet connecting services, the provider 914 starts the public Internet connecting service and then bears in a lump the initial costs for installing the IP network 97 including the certificate server 98. Then, charges which are collected after providing the services produce the profit. Therefore, the setting place of the service area is limited to places in which a large number of arbitrary people are gathered for obtaining the large amount of collected charges, e.g., an airport, a hotel, a station, and a café. Thus, the user can receive the public Internet connecting services only at the limited places.

Further, in the conventional system for providing public Internet connecting service, upon setting up the service area 910, the area owner 911 must bear the installation costs and the maintenance/management costs for the area set-up place, access line establishment, and connecting devices. The services are not excessively expanded.

In US patent application No. 2002/0075844, a system and method for providing public network access to wireless, mobile terminals using private networks having a private network access points and connections with the public network are disclosed. The wireless, mobile terminals are permitted to use wireless, radio frequency communication devices comprising private network access points and a network access server is associated with each wireless, radio frequency communication device and provides an interface between the wireless, mobile terminals and the private network. The network access server controls registration of wireless, mobile terminals as subscribers, and provides public network access to the mobile terminals through the private network's access point and public network connections. The network access server also restricts access by the mobile terminals to the private network, meters network useage by the mobile terminals, and controls use of bandwidth by the mobile terminals.

### SUMMARY OF THE INVENTION

It is an object of the present invention to provide a system for easily providing public Internet connecting services in a wide service area with low costs.

According to the present invention, there is provided a public Internet connecting service system as defined in claim 1 and an access line connecting device as defiled in claim 6.

In order to accomplish the above-mentioned object, according to an aspect of the present invention, a public Internet connecting service system is a public Internet connecting service system which provides the wireless Internet connecting service for the public. The public Internet connecting service system provides, for the public, the wireless connection to the Internet. The public Internet connecting service system includes a mobile terminal which is used for the wireless connection to the Internet, an access point which is wireless-connected to at least one of the mobile terminals and which relays the access to the Internet of the mobile terminal, and an access line connecting device which is installed in a house of a subscriber of Internet connecting services using an access line, and is connected to the access line and the access point so as to access the Internet by the subscriber, and which routes a packet so as to access the Internet via the access point by using the mobile terminal.

According to another aspect of the present invention, the access line connecting device routes the packet so as to access the Internet from both the port used by the subscriber and the port connected to the access point, thus to use, for the public Internet connecting service services, a partial area of the access line of the subscriber which subscribes the Internet connecting services using the access line.

Further, according to still another aspect of the present invention, the wireless public Internet connecting service services are provided at the subscriber's home of the Internet connecting services. Therefore, the services are used in a wide area.

The access line connecting device may separate the access to the Internet by the subscriber, from the access to the Internet via the access point from the mobile terminal, and routes the packet.

Therefore, the access line connecting device separates and routes the access from the mobile terminal and the access from the subscriber. The Internet connection of the mobile terminal does not influence on the Internet connection of the subscriber.

The access line connecting device may route the packet by routing a layer 2 and a layer 3.

Therefore, the access line connecting device combines the routing of the layer 2 and the layer 3, thus to effectively transfer the packet.

The access line connecting device may separate the access to the Internet by the subscriber, from the access to the Internet via the access point from the mobile terminal, thereby controlling the service quality.

The access line connecting device separates the access from the mobile terminal and the access of the subscriber and controls the QoS (Quality of Service) operation. Consequently, the service quality in both the mobile terminal and the subscriber is preferably ensured.

The access line connecting device may determine a communication band of one port connected to the access point and a communication band of another port, thereby limiting a transferred packet.

The access line connecting device limits the communication bands of the ports to predetermined values and therefore the throughput in both the mobile terminal and the subscriber is preferably ensured.

The access line connecting device may add an unused portion in the communication band of the other port to the communication band of the one port connected to the access point.

The access line connecting device allocates the unused portion in the communication band assigned to the subscriber to the Internet connection of the mobile terminal. As a consequence, the communication band of the access line is effectively used.

The access line connecting device changes the communication band of the one port connected to the access point and the communication band of the other port, depending on the time zone.

The access line connecting device effectively allocates, to the subscriber and the public Internet connecting services, the communication band of the access line based on the characteristics of the access amount depending on the time zone of the access of the subscriber and the access from the mobile terminal.

According to yet another aspect of the present invention, the access line connecting device routes the packets so as to access the Internet from both the port connected to the access point and the port used by the subscriber, thereby using, for the wireless public Internet connecting services, the partial band of the access line of the subscriber who subscribes the Internet connecting services by the access line. Further, in order to start the public Internet connecting services by the communication carrier, a large amount of initial investment is not necessary for installing another access line and additional access line connecting devices. Furthermore, the large amount of investment is not necessary for ensuring the service area.

According to a further aspect of the present invention, the wireless public Internet connecting service is started at the subscriber's home of the Internet connecting services. Therefore, the set-up place of the service area is not limited to places in which a large number of arbitrary people are gathered for obtaining the large amount of collected charges, e.g., an airport, hotel, station, and café. Thus, the public Internet connecting services are provided at the residential district and the services are used in the wide area.

According to still a further aspect of the present invention, an access line connecting device for connecting a plurality of nodes to the Internet via a single or plural access line(s), wherein a first group of the nodes belong to a local area network, a second group of the nodes does not belong to the local area network is provided.

The second group of the nodes may include at least one access point which is wireless-connected to a mobile terminal for providing Internet access to the mobile terminal via the access line connecting device.

### BRIEF DESCRIPTION OF THE DRAWINGS

Fig. 1 is a block diagram showing the structure of a public Internet connecting service system according to a conventional art;
Fig. 2 is a block diagram showing the structure of a public Internet connecting service system according to the first embodiment of the present invention;
Fig. 3 is a block diagram showing the structure of an access line connecting device shown in Fig. 2 according to the first embodiment;
Fig. 4 is a sequence diagram showing the initial operation of the access line connecting device shown in the public Internet connecting service system in Fig. 2 according to the first embodiment;
Fig. 5 is a sequence diagram showing the initial operation of an access point in the public Internet connecting service system shown in Fig. 2 according to the first embodiment;
Fig. 6 is a sequence diagram showing the operation of a terminal in subscriber's home in the public Internet connecting service system shown in Fig. 2 according to the first embodiment;
Fig. 7 is a sequence diagram showing the operation of a mobile terminal in the public Internet connecting service system shown in Fig. 2 according to the first embodiment;
Fig. 8 is a mode diagram showing the flow of packets in the public Internet connecting service system shown in Fig. 2 according to the first embodiment; and
Fig. 9 is a diagram for explaining the QoS (Quality of Service) control operation according to the second embodiment of the present invention.

### DESCRIPTION OF THE PREFERRED EMBODIMENTS

Embodiments of the present invention will be described with reference to the drawings. A public Internet connecting service system according to the first embodiment uses, for an access point, a part of a band of a broadband line connected to general broadband subscriber's home.

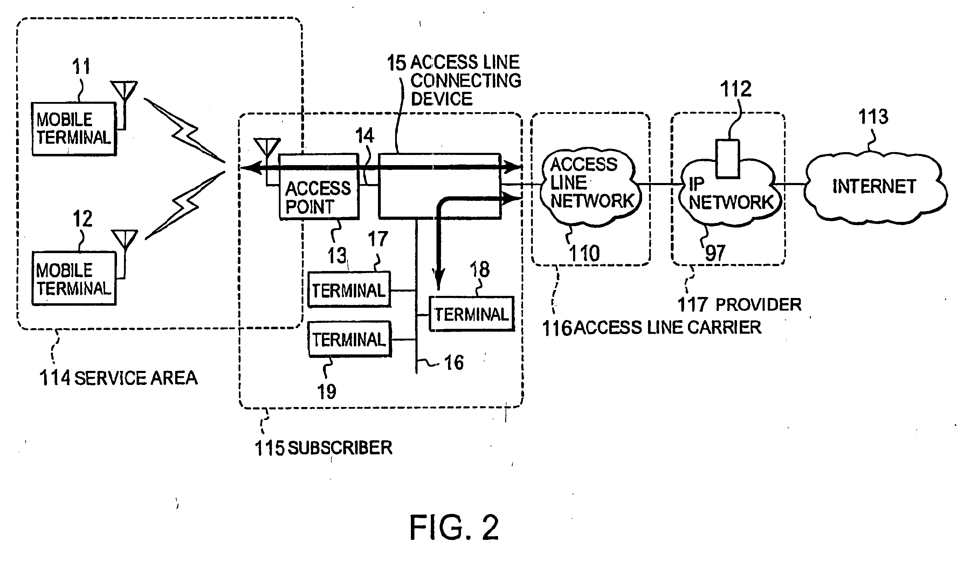

Fig. 2 is a block diagram showing the structure of a public Internet connecting service system according to the first embodiment of the present invention. Referring to Fig. 2, the public Internet connecting service system includes mobile terminals 11 and 12, an access point 13, and an access line connecting device 15.

The access point 13 is connected to the access line connecting device 15 via wiring LANs 14 and 16. The access point 13 and the access line connecting device 15 are provided in the house of a subscriber 115 which subscribes the Internet connecting services of a provider 117. A service area 114 of the public Internet connecting services is provided via a wireless LAN by using the access point 13 in the house of the subscriber 115.

The access line connecting device 15 is connected to an IP network 111 provided by the provider 117 via an access line network 110 provided by an access line carrier 116. The access line network 110 is a general broadband public network such as ADSL, CATV, or FTTH (Fiber To The Home), and is provided by an access line carrier 116. The provider 117 is a carrier which provides the public Internet connecting services.

The access line connecting device 15 is connected to the access point 13 and terminals 17 to 19 via LANs 14 and 16 such as Ethernet. Incidentally, referring to Fig. 2, the three terminals 17 to 19 are shown and, however, the number of mobile terminals is not limited to three.

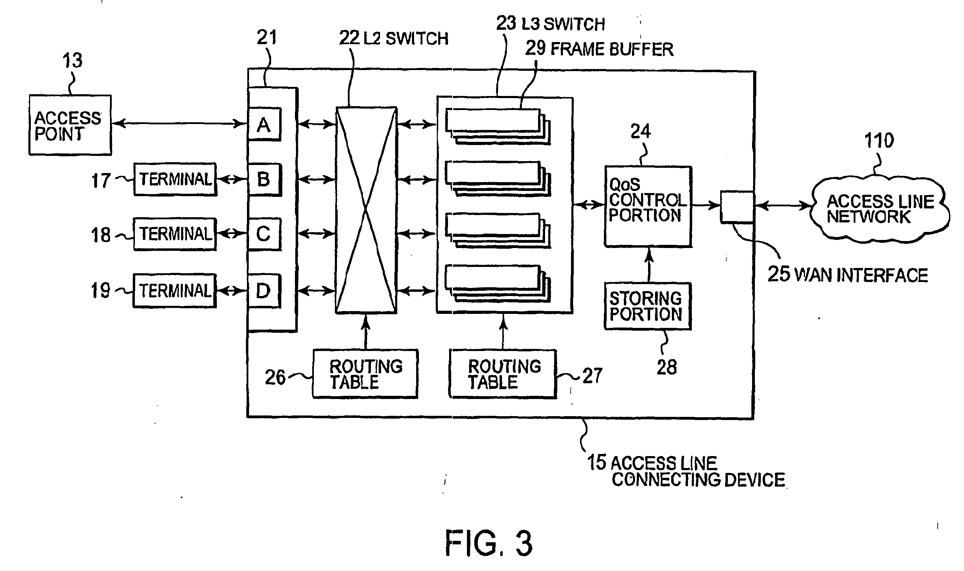

Fig. 3 is a block diagram showing the structure of the access line connecting device 15 shown in Fig. 2. Referring to Fig. 3, the access line connecting device 15 includes a LAN interface 21, an L2 switch 22. an L3 switch 23, a QoS (Quality of Service) control portion 24, a WAN interface 25, routing tables 26 and 27. a storing portion 28; and a frame buffer 29.

The LAN interface 21 includes a plurality of LAN ports (herein, A to D). The access point 13 or the terminals 17 to 19 are connected to the LAN ports A to D, respectively. The LAN interface 21 receives and transmits a frame from/to the access point 13 and the terminals 17 to 19. The WAN interface 25 receives and transmits the frame from/to the access line network 110.

The L2 switch 22 and the L3 switch 23 are arranged between the LAN interface 21 and the WAN interface 25 so as to effectively transfer the packet. In addition, the QoS control portion 24 for the QoS control operation is arranged between the LAN interface 21 and the WAN interface 25.

The L2 switch 22 routes a layer 2, performs the queuing of an L2 (layer 2) by a frame buffer (not shown), and controls the transfer of an L2 packet in accordance with L2 routing information registered in the routing table 26. Thus, the L2 switch 22 routes an Ethernet packet at a destination MAC address. The L2 switch 22 functions as a so-called LAN switch. The L2 routing information indicates a corresponding relationship between the destination MAC address of an MAC header of an MAC frame which is inputted to the L2 switch 22 and a LAN port which outputs the MAC frame. A frame buffer mainly includes a memory.

The L3 switch 23 routes a layer 3, performs the queuing of an L3 (layer 3) packet by a plurality of frame buffers 29. and controls the transfer of the L3 packet in accordance with L3 routing information registered in the routing table 27. Thus, the L3 switch 23 routes an IP packet at a destination IP address. The L3 switch 23 functions as a router. The L3 routing information indicates a corresponding relationship between the destination IP address of an IP header of the IP packet which is inputted to the L3 switch 23 and an LAN port which outputs the IP packet. The frame buffer 29 mainly includes a memory.

It is necessary to completely separate the LAN 14 connected to the access point 13 from the LAN 16 used in the house of the subscriber 115 of the broadband. The LAN 14 is separated from the LAN 16 by setting static routing information to the L2 switch 22 so as to prohibit the transfer of the entire packets including a broadcast packet of the layer L2. In this case, if any of the mobile terminals 11 and 12 using the public Internet connecting service is directly communicated with any of the terminals 17 to 19 in the house of the subscriber 115, the packet is transferred by the L3 switch 23.

The QoS control portion 24 controls QoS (Quality of Service) every LAN port in accordance with QoS control information recorded to the storing portion 28. Under the QoS control, a predetermined communication band is allocated to the LAN ports including the LAN port (herein, A) connected to the access point 13, and the packet transfer is limited to the communication band. The QoS control information recorded to the storing portion 28 includes information on the communication band allocated to the public Internet connecting service using the access point 13. If the communication band is allocated to the terminals 17 to 19, the communication band of the corresponding LAN portion is allocated. The QoS control information is variously prescribed. For example, the QoS control information is minimum guarantee band. The QoS control is realized by combining the priority transmission control and the fragmentation of data packet.

Referring back to Fig. 2, the IP network 111 is a private network which is managed and operated by the provider 117. and is connected to the internet 113. The IP network 111 includes a certificate server 112 which performs the certificating processing of the devices in the house of the subscriber 115 connected via the access line network 110. The certificate server 112 registers therein user information of the subscriber 115 who subscribes the provider 117 of the public Internet connecting services, and user information of the mobile terminals 11 and 12 of the user who subscribes the public Internet connecting service by the wireless LAN. The user information includes certificate information such as a user ID and a password, device type information of the devices, and a fixed IP address allocated to the device. The certificate server 112 performs the certificating processing by using the registered user information, and permits the connection to the Internet 113 of the normally-certificated device. The devices in the house of the subscriber 115 include the access line connecting device 15, the access point 13, the terminals 17 to 19, and the mobile terminals 11 and 12. Incidentally, the mobile terminals 11 and 12 do not exist in the house of the subscriber 115, and may be within the service area 114 of the access point 13. Various systems can be applied to the certificating processing. For example, a system in conformity with IEEE 802.1x is suitable to the certificating processing. Further, the certificating processing may be performed by ESS-ID or MAC filtering system which is currently widely used. The data encryption used for data communication can be various ones. For example, standard technologies such as WEP or IPsec can be applied.

The mobile terminals 11 and 12 include wireless LAN interfaces (not shown), are mobile information terminals which can be connected to the wireless LAN, and are used by users of the public Internet connecting service. For example, the mobile terminals 11 and 12 include notebook-type personal computers (PCs) connected to card-type wireless LAN modules as the wireless LAN interfaces. Referring to Fig. 2, the two mobile terminals 11 and 12 are shown and, however, the number of mobile terminals is not limited.

The access point 13 has wiring and wireless LAN interfaces. The access point 13 is connected to the mobile terminals 11 and 12 as a plurality of mobile terminals via the wireless LAN interfaces, thereby forming a network, and is connected to the access line connecting device 15 by the wiring LAN interface so as to communicate data. Various specifications can be applied to the wireless LAN. For example, an interface in conformity with IEEE 802.11b with a band of 2.4 GHz is applied to the wireless LAN. The access point 13 performs the user certification so as to prevent the illegal access such as interception and spoofing upon connection to the mobile terminals 11 and 12. Various systems can be applied to the user certification. For example, the interface of IEEE 802.1x can be applied to the user certification as mentioned above. Further, an interface of ESS-ID that is widely used can be applied as a typical security.

In the above-mentioned public Internet connecting service system, the user uses the mobile terminals 11 and 12 in the service area 114 of the public Internet connecting services, and accesses the Internet 113 via the access point 13 set in the house of the subscriber 115.

Next, a description is given of the operation of the public Internet connecting service system shown in Fig. 2. The public Internet connecting service system shown in Fig. 2 performs the initial operation of the access line connecting device 15, and then performs the initial operation of the access point 13. Thus, the terminals 17 to 19 and the mobile terminals 11 and 12 can access the Internet. Here, the terminal 11 and the mobile terminal 17 will be described.

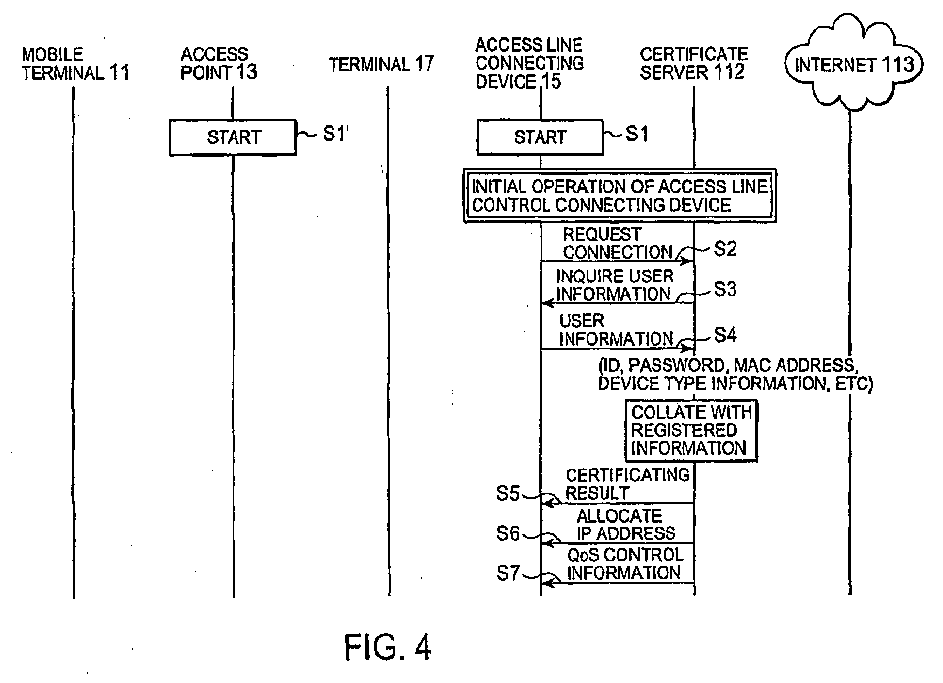

Fig. 4 is a sequence diagram showing the initial operation of the access line connecting device in the public Internet connecting service system shown in Fig. 2. The access line connecting device 15 starts, thereby starting the operation of the public Internet connecting service system (step S1).

The initialized access line connecting device 15 transmits a connecting request to the certificate server 112 of the provider 117 (step S2). The certificate server 112 which receives the connecting request returns a request for inquiring the user information to the access line connecting device 15 (step S3). The access line connecting device 15 transmits the user information such as the password to the motor 12 (step S4).

The certificate server 112 compares and collates the received user information with user registered information which is registered in the certificate server 112, and transmits the collating result as the certificated result to the access line connecting device 15 (step S5). A series of the procedure becomes the certificating procedure for the access line connecting device 15. If the user information received from the access line connecting device 15 matches the user registered information, the certification is OK. Although the user registered information is previously registered in the certificate server 112, it may be registered to another server for distributing the load.

If the certification is OK, the certificate server 112 issues the IP address to the access line connecting device 15 (step S6). Next, the certificate server 112 reads, from the user registered information, the QoS control information on the user which is certificated, and transmits the read information to the access line connecting device 15 (step S7). The access line connecting device 15 which receives the QoS control information records the QoS control information to the storing portion 28. The QoS control information includes the band information on the public Internet connecting service issued to the access point 13. The band information is information contracted to the provider 117 upon opening the public Internet connecting service by the subscriber 115.

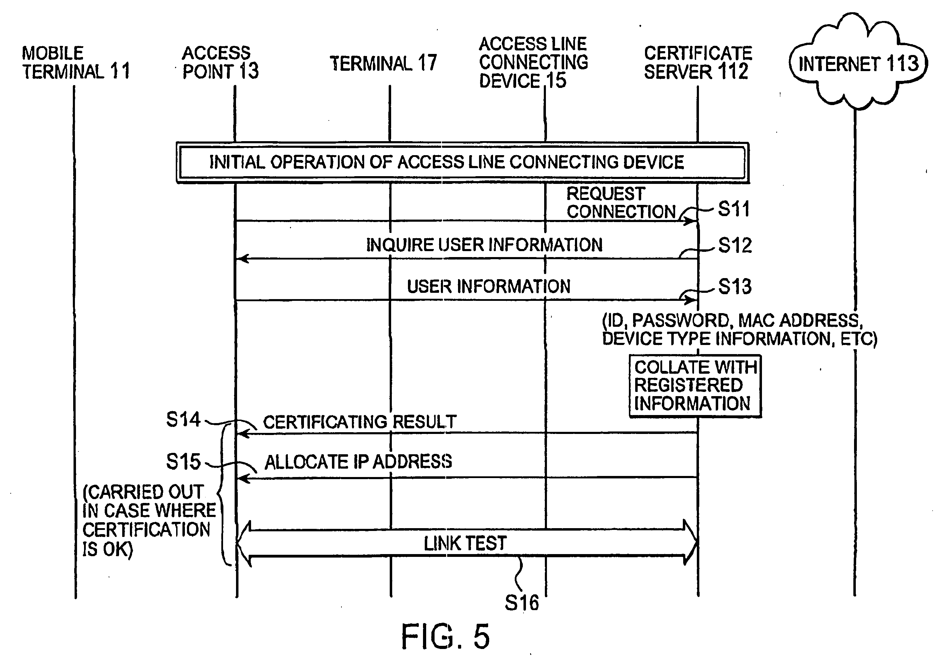

Fig. 5 is a sequence diagram showing the initial operation of the access point in the public Internet connecting service system shown in Fig. 2. The initial operation of the access line connecting device 15 ends and, then, the initial operation of the access point 13 starts. Although Fig. 4 shows the example (step S1') for starting the access point 13 together with the access line connecting device 15, the access point 13 may start after ending the initial operation of the access line connecting device 15.

First, the access point 13 transmits a connecting request to the certificate server 112 of the provider 117 (step S11). The certificate server 112 which receives the connecting request returns a request for inquiring the user information to the access point 13 (step S12).

The access point 13 returns the user information such as the user ID and the password to the certificate server 112 (step S13).

The certificate server 112 compares and collates the received user information with the user registered information which is previously registered in the certificate server 112. and transmits the correlating result as the certificating result to the access point 13 (step S14). A series of the procedure becomes the certificating procedure for the access line connecting device 15. If the user information received from the access point 13 matches the user registered information, the certification is OK.

If the certification is OK, the certificate server 112 issues the IP address to the access point 13 (step S15). Next, the certificate server 112 tests the link so as to check to see if the band set to the certificated access point 13 is valid (step S16). Based on the link test, it is checked to see if the QoS control information set to the access line connecting device 15 is valid and to see if the access point 13 is operated. Based on the contents of the link test, the effective transfer speed is measured and it is determined whether or not the data is transferred to the access point 13 with the set band.

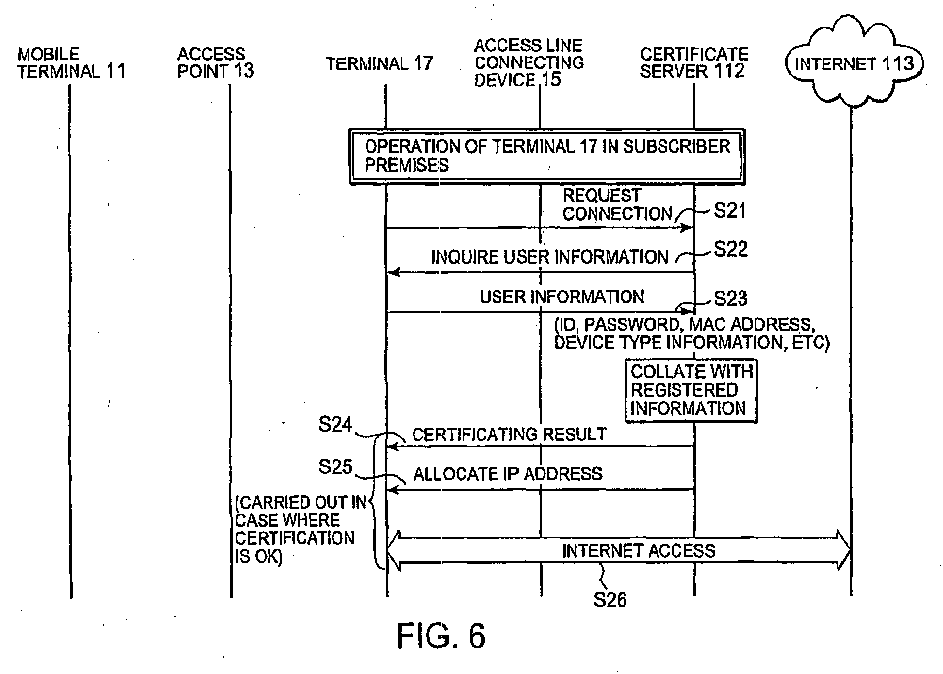

Fig. 6 is a sequence diagram showing the operation of terminal in subscriber's home in the public Internet connecting service system shown in Fig. 2.

The terminal 17 connected to the LAN 16 in the house of the subscriber 115 first transmits a connecting request to the certificate server 112 of the provider 117 so as to be connected to the Internet 113 (step S21). The certificate server 112 which receives the connecting request transmits, to the terminal 17, a request for inquiring the user information (e.g., user ID and password) necessary for the certification (step S22). The terminal 17 transmits the user information to the certificate server 112 (step S23).

The certificate server 112 which receives the user information from the terminal 17 collates the user information with the user registered information which is previously registered in the certificate server 112, and transmits the collating result as the certificating result to the terminal 17 (step S24).

If the certification is OK, the certificate server 112 issues the IP address to the terminal 17 (step S25). Consequently, the terminal 17 can access the Internet 113 (step S26). Although only the terminal 17 is described here, other terminals 18 and 19 are similarly operated.

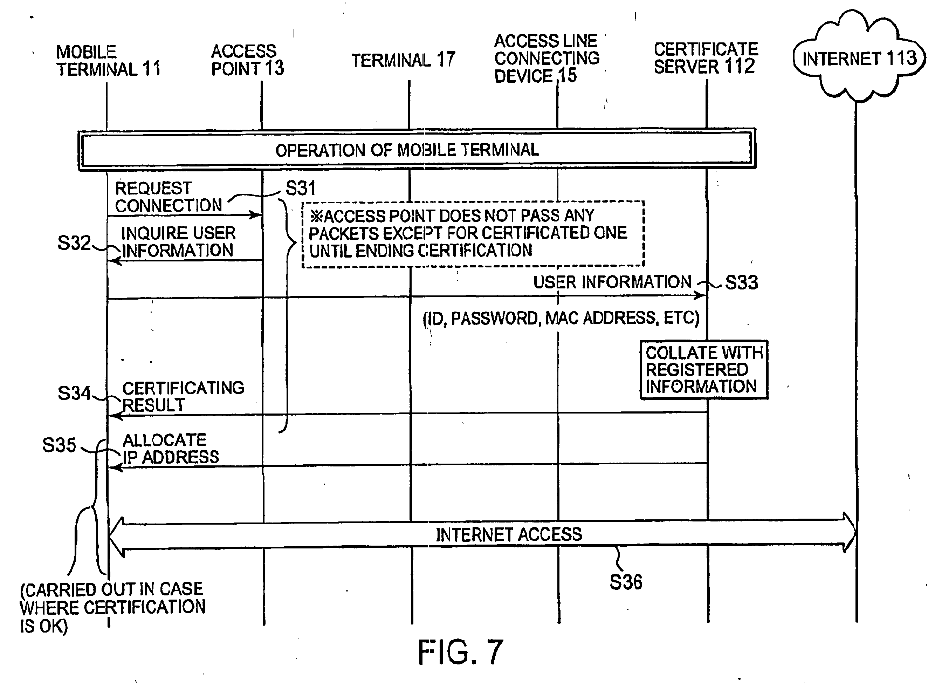

Fig. 7 is a sequence diagram showing the operation of the mobile terminal in the public Internet connecting service system shown in Fig. 2.

The mobile terminal 11 does not access the Internet 113 until normally ending the certificating processing to the certificate server 112 via the access point 13. Further, the access point 13 refuses the communication except for the certificating processing of the mobile terminal which is not certificated.

The mobile terminal 11 transmits a connecting request to the access point 13 (step S32). The access point 13 transmits a request for inquiring the user information to the mobile terminal 11 (step 333).

The mobile terminal 11 which receives the request transmits the user information to the access point 13 and, on the other hand, the access point 13 transfers the user information to the certificate server 112 (step S33). The certificate server 112 collates the user information with the user registered information which is previously registered in the certificate server 112, and transmits the collating request as the certificating result to the access point 13 (step S34). The access point 13 transfers the certificating result to the mobile terminals 11 and 12.

If the certification is OK, the certificate server 112 issues the IP address to the mobile terminal 11 (step S35), and the access point 13 opens a logical portion of the mobile terminal 11. Consequently, the mobile terminal 11 can access the Internet 113 (step S36).

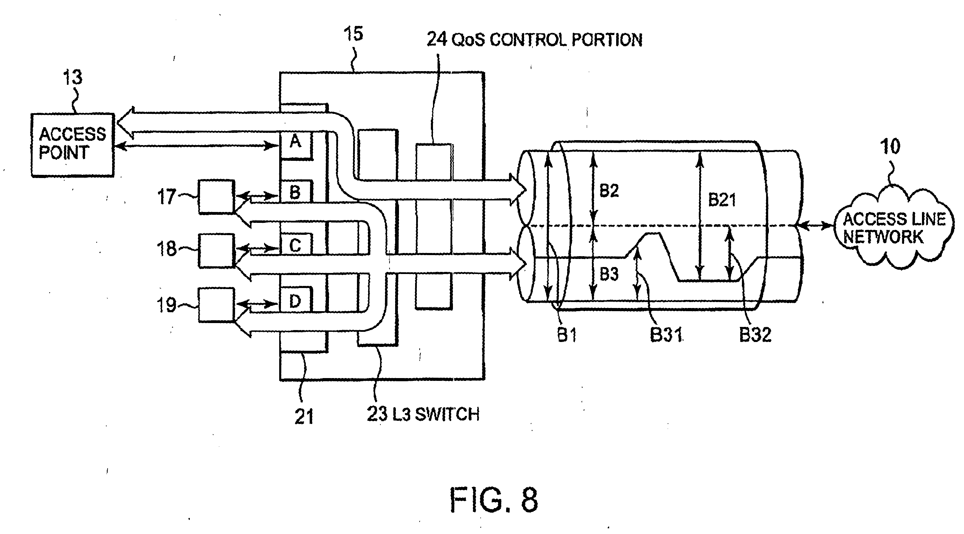

Fig. 8 is a mode diagram showing the flow of packets in the public Internet connecting service system shown in Fig. 2.

As one example, an up band (B1) of the access line network 110 which the subscriber 115 subscribes is 8 Mbps. A band (B2) allocated to the LAN portion connected to the access point 13 is 4 Mbps. A band (B3) shared with the terminals 17 to 19 is 4 Mbps. If so, the band of 4 Mbps is always allocated to the public Internet connecting service. Then, if the file transfer with a large capacity is generated in the terminal of the house of the subscriber 115, the band of the access line is not by the terminal. The processing sequences are stably provided.

As another example, an actually-used band (B31) of the access lines of the terminals 17 to 19 is fluctuated and then an unused band (B32) can be the band (B2) of the public Internet connecting service among the band (B3) shared by the terminals 17 to 19. Then, the band of the public Internet connecting service can expand if the subscriber 115 does not use the access line so much, and the band of the access line is effectively used.

As mentioned above, in the access line connecting device 15 according to the first embodiment, for the purpose of the routing, the L2 switch 22 and the L3 switch 23 separate the LAN portA connected to the access point 13 from the LAN ports B, C, and D used by the subscriber 115. For the QoS control operation, the QoS control portion 24 separates the LAN port A connected to the access point 13 from the LAN ports B, C, and D used by the subscriber 115. Thus, the subscribers does not influence on the Internet connection. It is possible to use, for the public Internet connecting service using the wireless LAN, the partial band of the broadband access line of the subscriber 115 which subscribes the Internet connecting services of the provider 117 with ensuring predetermined throughput. A large amount of initial investments is not necessary for setting another access line or another access line connecting device so as to start the public Internet connecting services by the carrier. Further, a large amount of investments is not necessary for assuring the service area.

Further, according to the first embodiment, the public Internet connecting service using the wireless LAN is started in the house of the subscriber 115 of the Internet connecting services and therefore the public Internet connecting service are provided in the residential district as well we the places in which a large number of arbitrary people gather, such as the airport, hotel, and station, and the services are used in the wide area.

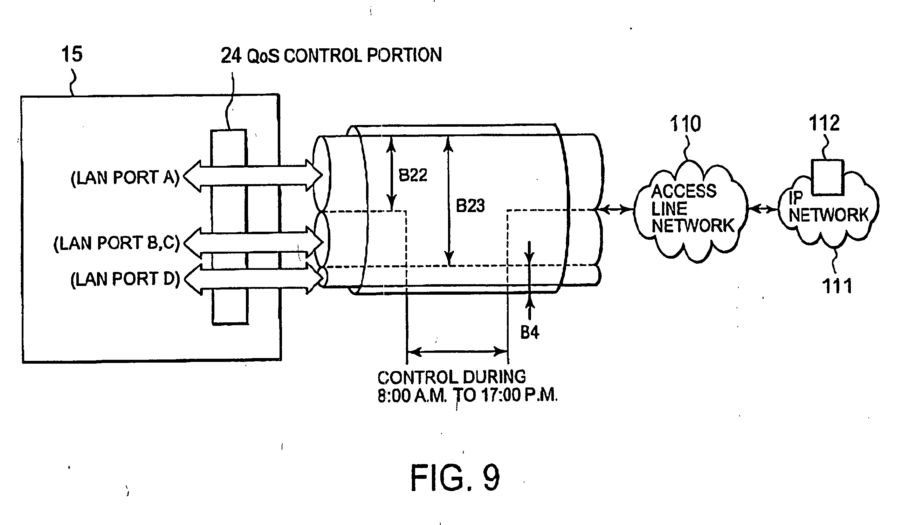

Next, a description is given of the second embodiment of the present invention with reference to Fig. 9. According to the second embodiment, the structure of the public Internet connecting service system is the same as that shown in Fig. 2. However, the QoS control operation of the access line connecting device 15 according to the second embodiment is different from that according to the first embodiment. The QoS control operation according to the second embodiment can change the QoS setting depending on the time zone.

Fig. 9 is a diagram for explaining the QoS control operation according to the second embodiment of the present invention. Time zone information and QoS control information are combined and are previously recorded to the certificate server 112. When the QoS control information is to be changed, the certificate server 112 transmits another QoS control information to the access line connecting device 15, and updates the information in the storing portion 28.

It is assumed that the access point 13 of the public Internet connecting service is connected to the LAN portA. Further, it is assumed that an IP phone is connected to the LAN port D. Furthermore, it is assumed that the number of access times to the LAN ports B and C is low during 8:00 a.m. to 5:00 p.m.

Referring to Fig. 9, a fixed band (B4) of 1 Mbps is allocated to the LAN port D because the IP phone uses the LAN port D. Further, a band (B22) of 4 Mbps is allocated to the access point 13, namely, the LAN port A which provides the public Internet connecting service for the time zone from 5:00 p.m. to 8:00 a.m.. Furthermore, a band (B23) of 7 Mbps is allocated to the access point 13, namely, the LAN port A for the time zone from 8:00 a.m. to 5:00 p.m.

As mentioned above, according to the second embodiment, based on the characteristics of the amount of access between the subscriber's access and the access of the mobile terminal depending on the time zone, the QoS control operation is switched depending on the time zone and thus the public Internet connecting services are operated by effectively using the band of the access line without preventing the use of the LAN 16 by the terminals 17 to 19 in the house of the subscriber 115.

The QoS control operation may be updated according to the second embodiment by arranging a timer circuit to the access line connecting device 15 to transmit the QoS control information every time zone to the access line connecting device 15 from the certificate server 112. In this case, the access line connecting device 15 may voluntarily switch the QoS control operation by managing the time with the timer circuit.

According to an embodiment, an access line connecting device is installed in a house of a subscriber of internet connecting services using an access line, and is connected to an access line and an access point. Further, the access line connecting device separates the access to the Internet by a subscriber and the access to the internet via the access point from a mobile terminal, thereby routing a packet and controlling the quality of service. Under the control operation of the quality of service, a communication band of one port connected to the access point and a communication band of another port are determined, thereby limiting a transferred packet.

## Claims

1. A public Internet connecting service system for providing, for the public, wireless connection to the Internet, the public Internet connecting service system comprising:
at least one mobile terminal (11, 12) providing the wireless connection to the Internet;
an access point (13) which is wireless-connected to at least one of the mobile terminals and which is adapted to relay the access to the Internet of the mobile terminal; and
an access line connecting device (15) which is installed in a house of a subscriber (115) of Internet connecting services using an access line, and is connected to the access line and the access point so as to access the Internet by the subscriber, and which is adapted to route a packet so as to access the Internet via the access point by using the mobile terminal;
**characterised in that**
the access line connecting device is adapted to determine a communication band of one port connected to the access point and a communication band of another port, thereby limiting a transfer of packets through the access line connecting device; and
wherein the access line connecting device is adapted to add an unused portion of the communication band of the other port to the communication band of the one port connected to the access point.

2. The public Internet connecting service system as claimed in Claim 1, wherein the access line connecting device is adapted to route packets sent from/to the subscriber and packets sent via the access point from/to the mobile terminal to provide Internet access to the subscriber and the mobile terminal.

3. The public Internet connecting service system as claimed in Claim 2, wherein the access line connecting device is adapted to route the packet by routing a layer 2 and a layer 3.

4. The public Internet connecting service system as claimed in Claim 2, wherein the access line connecting device is adapted to control the service quality of Internet access by the subscriber and of Internet access via the access point by the mobile terminal.

5. The public Internet connecting service system as claimed in one of Claims 1-4, wherein the access line connecting device changes the communication band of the one port connected to the access point and the communication band of the other port, depending on the time zone.

6. An access line connecting device for connecting a plurality of nodes to the Internet via a single or plural access line(s), wherein:
a first group of the nodes belong to a local area network, a second group of the nodes does not belong to the local area network; and
the second group of the nodes comprises at least one access point which is wireless-connected to a mobile terminal for providing Internet access by the mobile terminal via the access line connecting device;
**characterised in that**
the access line connecting device is adapted to determine a communication band of one port connected to the access point and a communication band of another port, thereby limiting a transfer of packets through the access line connecting device; and
wherein the access line connecting device is adapted to add an unused portion of the communication band of the other port to the communication band of the one port connected to the access point.

7. An access line connecting device as claimed in Claim 6, which is installed to a house of a subscriber of Internet connecting services using an access line, and which is adapted to access the Internet by the subscriber.

8. An access line connecting device as claimed in Claim 7, wherein the device comprising:
access point connecting means which is wireless-connected to a mobile terminal and which is connected to an access point for relaying the access to the Internet from the mobile terminal; and
routing means which routes a packet so as to access the Internet by the subscriber and to access the Internet via the access point by the mobile terminal.

9. The access line connecting device as claimed in Claim 8, wherein the routing means is adapted to route packets sent from/to the subscriber and packets sent via the access point from/to the mobile terminal to provide Internet access to the subscriber and the mobile terminal.

10. An access line connecting device as claimed in Claim 9, wherein the routing means (22) comprises L2 switch means for routing a layer 2 and L3 switch means (23) for routing a layer 3.

11. An access line connecting device as claimed in Claim 9, further comprising:
service quality control means (24) which controls the service quality of Internet access by the subscriber and of Internet access via the access point by the mobile terminal.

12. An access line connecting device as claimed in Claim 11, wherein the service quality control means determines said communication band of the one port connected to the access point and said communication band of the other port.

13. An access line connecting device as claimed in Claim 12, wherein the service quality control means adds said unused portion of the communication band of the other port to the communication band of the one port connected to the access point.

14. An access line connecting device as claimed in Claim 12 or 13, wherein the service quality control means changes the communication band of the one port connected to the access point and the communication band of the other port, depending on the time zone.

## Patentansprüche

1. Öffentliches Internet-Verbindungsdienstsystem zum Schaffen einer öffentlichen drahtlosen Verbindung mit dem Internet, wobei das öffentliche Internet-Verbindungsdienstsystem umfasst:
wenigstens ein mobiles Endgerät (11, 12), das eine drahtlose Verbindung mit dem Internet bereitstellt;
einen Zugriffspunkt (13), der mit wenigstens einem der mobilen Endgeräte drahtlos verbunden und so beschaffen ist, dass er den Zugriff auf das Internet des mobilen Endgeräts weiterleitet; und
eine Zugriffsleitungs-Verbindungsvorrichtung (15), die in einem Haus eines Teilnehmers (15) an dem Internetverbindungsdienst unter Verwendung einer Zugriffsleitung installiert ist und mit der Zugriffsleitung und mit dem Zugriffspunkt verbunden ist, damit der Teilnehmer auf das Internet zugreifen kann, und die so beschaffen ist, dass sie ein Paket in der Weise lenkt, dass auf das Internet über den Zugriffspunkt unter Verwendung des mobilen Endgeräts zugegriffen werden kann;
**dadurch gekennzeichnet, dass**
die Zugriffsleitungs-Verbindungsvorrichtung so beschaffen ist, dass sie ein Kommunikationsband eines mit dem Zugriffspunkt verbundenen Ports und ein Kommunikationsband eines weiteren Ports bestimmt, um **dadurch** eine Übertragung von Paketen durch die Zugriffsleitungs-Verbindungsvorrichtung zu begrenzen; und
wobei die Zugriffsleitungs-Verbindungsvorrichtung so beschaffen ist, dass sie einen unbenutzten Teil des Kommunikationsbandes des anderen Ports zu dem Kommunikationsband des mit dem Zugriffspunkt verbundenen einen Ports hinzufügt.

2. Öffentliches Internet-Verbindungsdienstsystem nach Anspruch 1, bei dem die Zugriffsleitungs-Verbindungsvorrichtung so beschaffen ist, dass sie Pakete, die von/zu dem Teilnehmer gesendet werden, und Pakete, die über den Zugriffspunkt von/zu dem mobilen Endgerät gesendet werden, lenkt, um einen Internetzugriff auf den Teilnehmer und auf das mobile Endgerät zu schaffen.

3. Öffentliches Internet-Verbindungsdienstsystem nach Anspruch 2, bei dem die Zugriffsleitungs-Verbindungsvorrichtung so beschaffen ist, dass sie das Paket durch Lenken einer Schicht 2 und einer Schicht 3 lenkt.

4. Öffentliches Internet-Verbindungsdienstsystem nach Anspruch 2, bei dem die Zugriffsleitungs-Verbindungsvorrichtung so beschaffen ist, dass sie die Dienstqualität des Internetzugriffs des Teilnehmers und des Internetzugriffs über den Zugriffspunkt durch das mobile Endgerät steuert.

5. Öffentliches Internet-Verbindungsdienstsystem nach einem der Ansprüche 1 bis 4, bei dem die Zugriffsleitungs-Verbindungsvorrichtung das Kommunikationsband des mit dem Zugriffspunkt verbundenen einen Ports und das Kommunikationsband des anderen Ports in Abhängigkeit von der Zeitzone ändert.

6. Zugriffsleitungs-Verbindungsvorrichtung zum Verbinden mehrerer Knoten mit dem Internet über eine einzige oder über mehrere Zugriffsleitungen, wobei:
eine erste Gruppe der Knoten zu einem lokalen Netz gehört, während eine zweite Gruppe der Knoten nicht zu dem lokalen Netz gehört; und
die zweite Gruppe von Knoten wenigstens einen Zugriffspunkt umfasst, der mit einem mobilen Endgerät drahtlos verbunden ist, um einen Internetzugriff für das mobile Endgerät über die Zugriffsleitungs-Verbindungsvorrichtung zu schaffen;
**dadurch gekennzeichnet, dass**
die Zugriffsleitungs-Verbindungsvorrichtung so beschaffen ist, dass sie ein Kommunikationsband eines mit dem Zugriffspunkt verbundenen Ports und ein Kommunikationsband eines weiteren Ports bestimmt, um **dadurch** eine Übertragung von Paketen über die Zugriffsleitungs-Verbindungsvorrichtung zu begrenzen; und
wobei die Zugriffsleitungs-Verbindungsvorrichtung so beschaffen ist, dass sie einen unbenutzten Teil des Kommunikationsbandes des anderen Ports zu dem Kommunikationsband des mit dem Zugriffspunkt verbundenen einen Ports hinzufügt.

7. Zugriffsleitungs-Verbindungsvorrichtung nach Anspruch 6, die in einem Haus eines Teilnehmers an den Internetverbindungsdiensten unter Verwendung einer Zugriffsleitung installiert ist und so beschaffen ist, dass der Teilnehmer auf das Internet zugreifen kann.

8. Zugriffsleitungs-Verbindungsvorrichtung nach Anspruch 7, wobei die Vorrichtung umfasst:
eine Zugriffspunkt-Verbindungseinrichtung, die mit einem mobilen Endgerät drahtlos verbunden ist und mit einem Zugriffspunkt verbunden ist, um den Zugriff auf das Internet von dem mobilen Endgerät weiterzuleiten; und
eine Lenkungseinrichtung, die ein Paket so lenkt, dass der Teilnehmer auf das Internet zugreifen kann und dass das mobile Endgerät auf das Internet über den Zugriffspunkt zugreifen kann.

9. Zugriffsleitungs-Verbindungsvorrichtung nach Anspruch 8, bei der die Lenkungseinrichtung so beschaffen ist, dass sie Pakete, die von/zu dem Teilnehmer gesendet werden, und Pakete, die über den Zugriffspunkt von/zu dem mobilen Endgerät gesendet werden, lenkt, um einen Internetzugriff auf den Teilnehmer und das mobile Endgerät zu schaffen.

10. Zugriffsleitungs-Verbindungsvorrichtung nach Anspruch 9, bei der die Lenkungseinrichtung (22) eine L2-Vermittlungseinrichtung zum Lenken einer Schicht 2 und eine L3-Vermittlungseinrichtung (23) zum Lenken einer Schicht 3 umfasst.

11. Zugriffsleitungs-Verbindungsvorrichtung nach Anspruch 9, die ferner umfasst:
eine Dienstqualitätssteuereinrichtung (24), die die Dienstqualität des Internetzugriffs durch den Teilnehmer und des Internetzugriffs über den Zugriffspunkt durch das mobile Endgerät steuert.

12. Zugriffsleitungs-Verbindungsvorrichtung nach Anspruch 11, bei der die Dienstqualitätsteuereinrichtung das Kommunikationsband des mit dem Zugriffspunkt verbundenen einen Ports und das Kommunikationsband des anderen Ports bestimmt.

13. Zugriffsleitungs-Verbindungsvorrichtung nach Anspruch 12, bei der die Dienstqualitätsteuereinrichtung den unbenutzten Teil des Kommunikationsbandes des anderen Ports zu dem Kommunikationsband des mit dem Zugriffspunkt verbundenen einen Ports hinzufügt.

14. Zugriffsleitungs-Verbindungsvorrichtung nach Anspruch 12 oder 13, bei der die Dienstqualitätsteuereinrichtung das Kommunikationsband des mit dem Zugriffspunkt verbundenen einen Ports und das Kommunikationsband des anderen Ports in Abhängigkeit von der Zeitzone ändert.

## Revendications

1. Système public de service de connexion à Internet destiné à fournir au public une connexion sans fil à Internet, ledit système public de service de connexion à Internet comprenant :
au moins un terminal mobile (11, 12) fournissant la connexion sans fil à Internet ;
un point d'accès (13) qui est connecté sans fil à au moins l'un des terminaux mobiles et qui est adapté pour relayer l'accès à Internet de ce terminal mobile ; et
un dispositif de connexion à une ligne d'abonné (15) qui est installé dans la maison d'un abonné (115) à des services de connexion à Internet en utilisant une ligne d'abonné, et est connecté à la ligne d'abonné et au point d'accès de manière à permettre à l'accès à Internet à l'abonné, et qui est adapté pour acheminer un paquet de manière à accéder à Internet via le point d'accès en utilisant le terminal mobile ;
**caractérisé en ce que**
le dispositif de connexion à une ligne d'abonné est adapté pour déterminer une bande de communication d'un port connecté au point d'accès et une bande de communication d'un autre port, limitant ainsi le transfert de paquets via le dispositif de connexion à une ligne d'abonné ; et
dans lequel le dispositif de connexion à une ligne d'abonné est adapté pour ajouter une partie non utilisée de la bande de communication de l'autre port à la bande de communication du port connecté au point d'accès.

2. Système public de service de connexion à Internet selon la revendication 1, dans lequel le dispositif de connexion à une ligne d'abonné est adapté pour acheminer les paquets envoyés depuis/vers l'abonné et les paquets envoyés via le point d'accès depuis/vers le terminal mobile pour fournir un accès à Internet à l'abonné et au terminal mobile.

3. Système public de service de connexion à Internet selon la revendication 2, dans lequel le dispositif de connexion à une ligne d'abonné est adapté pour acheminer les paquets en acheminant une couche 2 et une couche 3.

4. Système public de service de connexion à Internet selon la revendication 2, dans lequel le dispositif de connexion à une ligne d'abonné est adapté pour commander la qualité de service de l'accès à Internet par l'abonné et la qualité de service de l'accès à Internet via le point d'accès au moyen du terminal mobile.

5. Système public de service de connexion à Internet selon l'une quelconque des revendications 1 à 4, dans lequel le dispositif de connexion à une ligne d'abonné change la bande de communication du port connecté au point d'accès et la bande de communication de l'autre port, en fonction du fuseau horaire.

6. Dispositif de connexion à une ligne d'abonné destiné à connecter une pluralité de noeuds à Internet via une seule ou plusieurs lignes d'accès, dans lequel :
un premier groupe de noeuds appartient à un réseau local, un second groupe de noeuds n'appartient pas au réseau local ; et
le second groupe de noeuds comprend au moins un point d'accès qui est connecté sans fil à un terminal mobile pour fournir un accès à Internet par le terminal mobile via le dispositif de connexion à une ligne d'abonné ;
**caractérisé en ce que**
le dispositif de connexion à une ligne d'abonné est adapté pour déterminer une bande de communication d'un port connecté au point d'accès et une bande de communication d'un autre port, limitant ainsi le transfert de paquets via le dispositif de connexion à une ligne d'abonné ; et
dans lequel le dispositif de connexion à une ligne d'abonné est adapté pour ajouter une partie non utilisée de la bande de communication de l'autre port à la bande de communication du port connecté au point d'accès.

7. Dispositif de connexion à une ligne d'abonné selon la revendication 6, qui est installé dans la maison d'un abonné à des services de connexion à Internet utilisant une ligne d'abonné, et qui est adapté pour permettre l'accès à Internet à l'abonné.

8. Dispositif de connexion à une ligne d'abonné selon la revendication 7, dans lequel le dispositif comprend :
un moyen de connexion au point d'accès qui est connecté sans fil à un terminal mobile et qui est connecté à un point d'accès pour relayer l'accès à Internet à partir du terminal mobile ; et
un moyen d'acheminement qui achemine un paquet de manière à permettre l'accès à Internet à l'abonné et l'accès à Internet via le point d'accès par le terminal mobile.

9. Dispositif de connexion à une ligne d'abonné selon la revendication 8, dans lequel le moyen d'acheminement est adapté pour acheminer les paquets envoyés depuis/vers l'abonné et les paquets envoyés via le point d'accès depuis/vers le terminal mobile pour fournir un accès à Internet à l'abonné et au terminal mobile.

10. Dispositif de connexion à une ligne d'abonné selon la revendication 9, dans lequel le moyen d'acheminement (22) comprend un moyen de commutation L2 destiné à acheminer une couche 2 et un moyen de commutation L3 (23) destiné à acheminer une couche 3.

11. Dispositif de connexion à une ligne d'abonné selon la revendication 9, comprenant en outre :
un moyen de commande de la qualité de service (24) qui permet de commander la qualité de service de l'accès à Internet par l'abonné et la qualité de service de l'accès à Internet via le point d'accès au moyen du terminal mobile.

12. Dispositif de connexion à une ligne d'abonné selon la revendication 11, dans lequel le moyen de commande de la qualité de service détermine ladite bande de communication du port connecté au point d'accès et ladite bande de communication de l'autre port.

13. Dispositif de connexion à une ligne d'abonné selon la revendication 12, dans lequel le moyen de commande de la qualité de service ajoute ladite partie non utilisée de la bande de communication de l'autre port à la bande de communication du port connecté au point d'accès.

14. Dispositif de connexion à une ligne d'abonné selon la revendication 12 ou 13, dans lequel le moyen de commande de la qualité de service change la bande de communication du port connecté au point d'accès et la bande de communication de l'autre port, en fonction du fuseau horaire.
